# EUROPEAN PATENT SPECIFICATION

(11) **EP 2 896 535 B1**
(45) Date of publication and mention of the grant of the patent: **10.01.2018**
(21) Application number: 13837779.1
(22) Date of filing: 12.09.2013
(51) Int. Cl.: B60R 19/04, B60R 19/18, B60R 19/24, B60R 19/34, B62D 25/08

(54) **STRUCTURE FOR FRONT PART OF BODY OF AUTOMOBILE**
VORDERBAUSTRUKTUR EINER AUTOMOBILKAROSSERIE
STRUCTURE POUR PARTIE AVANT DE LA CARROSSERIE D'UNE AUTOMOBILE

(30) Priority: 13.09.2012 JP 2012201994; 13.09.2012 JP 2012201995
(43) Date of publication of application: 22.07.2015
(73) Proprietor: Honda Motor Co., Ltd., Minato-ku Tokyo 107-8556 (JP)
(72) Inventor: YABU, Tomoya, Wako-shi, Saitama 351-0193 (JP); YASUHARA, Shigeto, Wako-shi, Saitama 351-0193 (JP); MARLER, David, Norwich Norfolk NR14 8EZ (GB)
(74) Representative: Prechtel, Jörg
(86) International application number: PCT/JP2013/074683
(87) International publication number: WO 2014/042211

(56) References cited:
- JP-A- 2000 081 069
- JP-A- 2002 054 672
- JP-A- 2002 054 672
- JP-A- 2009 113 675
- JP-A- 2009 154 587
- JP-A- 2010 095 038
- JP-U- H0 165 741
- JP-U- S5 932 544
- US-A1- 2010 102 592
- US-B1- 6 406 088

## Description

### TECHNICAL FIELD

The present invention relates to a structure for a front part of a body of an automobile, in which a rear end part of a bumper beam extension made of a fiber-reinforced resin is fixed to a mounting plate provided on a front end part of a front side frame made of metal.

### BACKGROUND ART

An arrangement in which a pair of left and right crash rails (bumper beam extensions) that absorb collision energy by crumpling when an automobile is involved in a frontal collision are formed from a carbon fiber-reinforced resin into a hollow rectangular cross section, and the thickness thereof is reduced gradually from the rear end side to the front end side is known from US 6406088 B1 on which the preamble of claim 1 is based.

Furthermore, an arrangement in which a pair of left and right crush boxes (bumper beam extensions) that absorb collision energy by crumpling when an automobile is involved in a frontal collision are formed from a carbon fiber-reinforced resin into a wave-shaped cross section, and a rear end part thereof is secured via a joint member to a front end part of a front side member (front side frame) made of aluminum is known from JP 2008-296823 A.

Furthermore, an arrangement in which a pair of left and right load energy-absorbing materials (bumper beam extension) that absorb collision energy by crumpling when an automobile is involved in a frontal collision are formed from a fiber-reinforced resin into a wave-shaped cross section, and opposite end parts in the vehicle width direction of a bumper reinforcement (bumper beam) are secured to front end parts of the above by means of bolts is known from JP 2007-8283 A.

### SUMMARY OF THE INVENTION

### PROBLEMS TO BE SOLVED BY THE INVENTION

In the arrangement described in JP 2008-296823 A above, a joint member that is made of metal and split into two is fixed to the rear end part of the bumper beam extension having a wave shape by means of an adhesive, and this joint member is fitted to the front end part of the hollow rectangular cross section front side frame and secured by means of a bolt. Forming a hollow part having low stiffness on the joint member in the vicinity of the bolt prevents the adhesive from being peeled off by means of the tightening force of the bolt.

However, since the joint member is made of metal, has a heavy weight, and has a complicated cross-sectional shape, there is not only the problem of high production cost, but there is also the possibility that, when a collision load in the fore-and-aft direction is inputted into the bumper beam extension, the joint member having the hollow part, which is weak, will break, the bumper beam extension will be inclined from the fore-and-aft direction, crumpling due to the collision load will not be able to be carried out efficiently, and the effect in absorbing the collision energy will be degraded.

The present invention has been accomplished in light of the above circumstances, and it is an object thereof to enhance a collision energy-absorbing effect by strongly joining with a simple structure a bumper beam extension made of a fiber-reinforced resin and a front side frame made of metal.

### MEANS FOR SOLVING THE PROBLEMS

In order to attain the above object, the present invention provides a structure for a front part of an automobile according to claim 1.

According to a first aspect of the present invention, there is provided the structure for a front part of a body of an automobile, in which a rear end part of a bumper beam extension made of a fiber-reinforced resin is fixed to a mounting plate provided on a front end part of a front side frame made of metal, wherein the bumper beam extension is formed with a hollow closed cross-section by joining together joining flanges of a pair of left and right hat-shaped cross section members, a rear support member secured to the mounting plate comprises a forward-projecting rib having a closed cross-section, and the rear end part of the bumper beam extension is fitted into and fixed to an inner periphery of the rib of the rear support member.

Further, according to a second aspect of the present invention, in addition to the first aspect, a lower member support member made of a fiber-reinforced resin is fixed to an outer face in a vehicle width direction of the bumper beam extension, and the lower member support member comprises an inside part that has a substantially squared U-shaped cross section opening forward or rearward while having a bottom wall, an upper wall and a lower wall, and an outside part that has a substantially L-shaped cross section while having a front wall and a side wall and being fixed to a lower member.

Furthermore, according to a third aspect of the present invention, in addition to the second aspect, the rear support member of the bumper beam extension is formed into a substantially squared U-shaped cross section opening forward while having a main body portion, an upper horizontal rib and a lower horizontal rib, and an opening part of the lower member support member that opens rearward is fitted into an interior of an opening part of the rear support member.

Moreover, according to a fourth aspect of the present invention, in addition to any one of the first to third aspects, a front mounting member made of a fiber-reinforced resin and having a bumper beam secured thereto is fixed to a front end part of the bumper beam extension, the front mounting member is formed into a substantially squared U-shaped cross section opening rearward while having a main body portion, an upper horizontal rib and a lower horizontal rib, and the upper horizontal rib and the lower horizontal rib oppose a front end part of the joining flange of the bumper beam extension so as to be capable of abutting thereagainst.

Further, according to a fifth aspect of the present invention, in addition to the second aspect, a front bulkhead is fixed to an inner face in the vehicle width direction at a position of the bumper beam extension further forward than the lower member support member via a front bulkhead support member, and the front bulkhead support member is formed so as to be thinner than the lower member support member.

Furthermore, according to a sixth aspect of the present invention, in addition to the fifth aspect, the front bulkhead is formed into a rectangular frame shape when viewed from the front by joining a middle part in the vehicle width direction of a substantially U-shaped upper member opening rearward when viewed from above and a substantially U-shaped lower member opening upward when viewed from the front, and corner parts on opposite sides in the vehicle width direction of the lower member and a front end part of the lower member are linked via a linking member made of a fiber-reinforced resin.

Moreover, according to a seventh aspect of the present invention, in addition to any one of the first to sixth aspects, the thickness of the bumper beam extension is uniform from the front toward the rear, and the cross-sectional area of the closed cross section of the bumper beam extension increases in going from the front toward the rear.

Further, according to an eighth aspect of the present invention, in addition to the first aspect, opposite end parts in the vehicle width direction of a bumper beam are fixed to front end parts of a pair of the left and right bumper beam extensions, the bumper beam having an impact absorbing member made of a fiber-reinforced resin joined to a front face of a bumper beam main body made of a steel sheet.

Furthermore, according to a ninth aspect of the present invention, in addition to the eighth aspect, a front mounting member having an extension portion extending inside in the vehicle width direction is fixed to the front end part of the bumper beam extension, and in a state in which an outer end in the vehicle width direction of the bumper beam main body is positioned further outside in the vehicle width direction than a center line of the bumper beam extension, the bumper beam main body is secured to a front face of the extension portion.

Moreover, according to a tenth aspect of the present invention, in addition to the eighth or ninth aspect, the bumper beam main body is a member having a substantially squared U-shaped cross section opening rearward while having a bottom wall, an upper wall and a lower wall, the impact absorbing member is a member having a substantially V-shaped cross section opening rearward while having an upper wall and a lower wall, and the upper wall and the lower wall of the impact absorbing member are joined to the upper wall and the lower wall of the bumper beam main body.

Further, according to an eleventh aspect of the present invention, in addition to the tenth aspect, the upper wall and the lower wall of the impact absorbing member comprise a plurality of beads extending in a fore-and-aft direction.

Furthermore, according to a twelfth aspect of the present invention, in addition to any one of the eighth to eleventh aspects, an outer end in the vehicle width direction of the impact absorbing member is positioned in the vicinity of parts where the bumper beam main body and the extension portion are fastened to each other.

Moreover, according to a thirteenth aspect of the present invention, in addition to the ninth aspect, the bumper beam extension is a member having a hollow closed cross-section and is fixed by fitting a front end part of the bumper beam extension to an inside of a rib that has a closed cross-section and is provided so as to project rearward from a rear face of the front mounting member.

An outer half body 21 and an inner member 22 of an embodiment correspond to the hat-shaped cross section member of the present invention, upper joining flanges 21d and 22d and lower joining flanges 21e and 22e of the embodiment correspond to the joining flange of the present invention, an upper horizontal rib 23b, a lower horizontal rib 23c, and vertical ribs 23d and 23e of the embodiment correspond to the rib of the present invention, an upper horizontal rib 24b, a lower horizontal rib 24c, and vertical ribs 24d and 24e of the embodiment correspond to the rib of the present invention, and an outside wall 34f of the embodiment corresponds to the side wall of the present invention.

### EFFECTS OF THE INVENTION

In accordance with the first aspect of the present invention, the rear end part of the bumper beam extension, which is made of a fiber-reinforced resin, is fixed to the mounting plate provided on the front end part of the front side frame, which is made of metal. Since the bumper beam extension is formed into a hollow closed cross-section by joining together the joining flanges of the pair of left and right hat-shaped cross section members, the rear support member secured to the mounting plate includes the rib having a closed cross-section, which projects forward, and the rear end part of the bumper beam extension is fitted into and fixed to the inner periphery of the rib of the rear support member, it is possible to strongly integrate the rear end part of the bumper beam extension with the rear support member by means of a structure that is lightweight and simple, and when the bumper beam extension is pressed against the mounting plate on the front end part of the front side frame by means of the collision load of a frontal collision, it is possible, by preventing the bumper beam extension from being inclined relative to the fore-and-aft direction, to increase the amount of energy absorbed by reliably crumpling the entire bumper beam extension.

Furthermore, in accordance with the second aspect of the present invention, since the lower member support member, which is made of a fiber-reinforced resin, is fixed to the outer face in the vehicle width direction of the bumper beam extension, and the lower member support member includes the inside part having a substantially squared U-shaped cross section opening forward or rearward while having the bottom wall, the upper wall, and the lower wall, and the outside part having a substantially L-shaped cross section and fixed to the lower member while having the front wall and the outside wall, it is possible for an energy-absorbing effect to be exhibited by crumpling the lower member support member and the lower member by means of the collision load of a frontal collision transmitted from the bumper beam extension.

Moreover, in accordance with the third aspect of the present invention, since the rear support member of the bumper beam extension is formed into a substantially squared U-shaped cross section opening forward while having the main body portion, the upper horizontal rib, and the lower horizontal rib, and the opening part of the lower member support member opening rearward is fitted into the interior of the opening part of the rear support member, when the collision load of a frontal collision is inputted into the lower member support member, it is possible for an energy-absorbing effect to be exhibited due to the opening part of the lower member support member being fitted into the interior of the opening part of the rear support member.

Furthermore, in accordance with the fourth aspect of the present invention, since the front mounting member, which is made of a fiber-reinforced resin, is fixed to the front end part of the bumper beam extension, the bumper beam being secured to the front mounting member, the front mounting member is formed into a substantially squared U-shaped cross section opening rearward while having the main body portion, the upper horizontal rib, and the lower horizontal rib, and the upper horizontal rib and the lower horizontal rib oppose the front end part of the joining flange of the bumper beam extension so as to be capable of abutting thereagainst, when the collision load of a frontal collision is inputted from the bumper beam into the front mounting member, it is possible for the upper horizontal rib and the lower horizontal rib of the front mounting member, which moves rearward, to bite into the joining flange of the bumper beam extension, thus enabling an energy-absorbing effect to be exhibited.

Moreover, in accordance with the fifth aspect of the present invention, the front bulkhead is fixed to the inner face in the vehicle width direction at a position further forward than the lower member support member of the bumper beam extension via the front bulkhead support member. In this arrangement, since the front bulkhead support member is formed so as to be thinner than the lower member support member, the strength of the bumper beam extension increases gradually in going from the front side toward the rear side, and it is thereby possible to sequentially crumple the bumper beam extension from the front end side by means of the collision load of a frontal collision, thus enhancing the energy-absorbing effect.

Furthermore, in accordance with the sixth aspect of the present invention, the front bulkhead is formed into a rectangular frame shape when viewed from the front by joining the middle part in the vehicle width direction of the substantially U-shaped upper member that opens rearward when viewed from above, to the substantially U-shaped lower member that opens upward when viewed from the front. Since the corner parts at the opposite sides in the vehicle width direction of the lower member and the front end part of the lower member are linked via the linking member, which is made of a fiber-reinforced resin, it is possible to disperse a collision load that has been transmitted from the bumper beam extension to the front bulkhead, to the lower member via the linking member and to absorb it effectively.

Moreover, in accordance with the seventh aspect of the present invention, since the thickness of the bumper beam extension is uniform from the front toward the rear, and the cross-sectional area of the closed cross-section of the bumper beam extension increases in going from the front toward the rear, it is possible to crumple the bumper beam extension by virtue of the load of the frontal collision sequentially from the front end side, in which the strength is low, to the rear end side, in which the strength is high, thereby enhancing the impact absorption performance.

Furthermore, in accordance with the eighth aspect of the present invention, since the opposite end parts in the vehicle width direction of the bumper beam are fixed to the front end part of the pair of left and right bumper beam extensions, the bumper beam having the impact absorbing member made of a fiber-reinforced resin joined to the front face of the bumper beam main body made of a steel sheet, the impact absorbing member, which is made of a fiber-reinforced resin and is highly brittle, is reinforced by the bumper beam main body, which is made of a steel sheet and is highly malleable, thus enhancing the bending stiffness of the bumper beam. Therefore, when the collision load of a frontal collision is inputted into the middle part in the vehicle width direction of the bumper beam, first the impact absorbing member crumples to thus absorb the collision energy, the bumper beam main body, while flexing rearward, then transmits the collision load to the front end of the bumper beam extension as a load in the fore-and-aft direction, and the bumper beam extension is crumpled in the fore-and-aft direction, thus absorbing the collision energy. In this way, due to the bumper beam main body, which is made of a steel sheet, and the impact absorbing member, which is made of a fiber-reinforced resin, being joined, it is possible to enhance the collision energy-absorbing effect by imparting malleability and brittleness to the bumper beam.

Moreover, in accordance with the ninth aspect of the present invention, since the front mounting member having the extension portion extending inside in the vehicle width direction is fixed to the front end part of the bumper beam extension, and in a state in which the outer end in the vehicle width direction of the bumper beam main body is positioned further outside in the vehicle width direction than the center line of the bumper beam extension the bumper beam main body is secured to the front face of the extension portion, it is possible, by strongly reinforcing by means of the front mounting member the parts of the bumper beam and the bumper beam extension where they are joined so that the angle formed thereby does not change, to exert a compressive load in the fore-and-aft direction on the bumper beam extension without exerting a bending moment thereon, thus enabling the bumper beam extension to be reliably crumpled in the fore-and-aft direction.

Furthermore, in accordance with the tenth aspect of the present invention, the bumper beam main body is a member having a substantially squared U-shaped cross section opening rearward while having the bottom wall, the upper wall, and the lower wall, the impact absorbing member is a member having a substantially V-shaped cross section opening rearward while having the upper wall and the lower wall, and the upper wall and the lower wall of the impact absorbing member are joined to the upper wall and the lower wall of the bumper beam main body, therefore making it possible to enhance the energy-absorbing effect by forming the bumper beam into a hollow closed cross-section and to further enhance the efficiency of transmitting a collision load to the bumper beam extension by increasing the bending stiffness of the bumper beam.

Moreover, in accordance with the eleventh aspect of the present invention, since the upper wall and the lower wall of the impact absorbing member include the plurality of beads extending in the fore-and-aft direction, it is possible to increase the amount of energy absorbed when involved in a frontal collision.

Furthermore, in accordance with the twelfth aspect of the present invention, since the outer end in the vehicle width direction of the impact absorbing member is positioned in the vicinity of the parts of the bumper beam main body and the extension portion where they are fastened, switching from energy absorption by crumpling of the impact absorbing member to energy absorption by crumpling of the bumper beam extension is carried out smoothly, thus enhancing the energy-absorbing effect.

Moreover, in accordance with the thirteenth aspect of the present invention, since the bumper beam extension is a member having a hollow closed cross-section, and the front end part of the bumper beam extension is fitted into and fixed to the inside of the rib, which has a closed section, provided so as to project rearward from the rear face of the front mounting member, not only is it possible to easily carry out positioning when the bumper beam extension and the front mounting member are joined, but it is also possible, by strongly joining the front mounting member to the bumper beam extension so that it is not inclined relative thereto, to more reliably carry out the transmission of a collision load from the bumper beam to the bumper beam extension.

### BRIEF DESCRIPTION OF DRAWINGS

[FIG. 1] FIG. 1 is an exploded perspective view of a vehicle body front part of an automobile. (first embodiment)
[FIG. 2] FIG. 2 is a view in the direction of arrow 2 in Fig. 1. (first embodiment)
[FIG. 3] FIG. 3 is a sectional view along line 3-3 in FIG. 2. (first embodiment)
[FIG. 4] FIG. 4 is a sectional view along line 4-4 in FIG. 2. (first embodiment)
[FIG. 5] FIG. 5 is a view in the direction of arrow 5 in Fig. 2. (first embodiment)
[FIG. 6] FIG. 6 is a view in the direction of arrow 6 in Fig. 2. (first embodiment)
[FIG. 7] FIG. 7 shows sectional views along line 7A-7A, line 7B-7B, and line 7C-7C in FIG. 3. (first embodiment)
[FIG. 8] FIG. 8 is an enlarged view of part 8 in FIG. 2. (first embodiment)
[FIG. 9] FIG. 9 is an exploded perspective view of a bumper beam extension, a rear support member, and a front mounting member. (first embodiment)

### EXPLANATION OF REFERENCE NUMERALS AND SYMBOLS

- 16: Front side frame
- 17: Bumper beam extension
- 18: Bumper beam
- 20: Front bulkhead
- 21: Outer half body (hat-shaped cross section member)
- 21d: Upper joining flange (joining flange)
- 21e: Lower joining flange (joining flange)
- 22: Inner half body (hat-shaped cross section member)
- 22d: Upper joining flange (joining flange)
- 22e: Lower joining flange (joining flange)
- 23: Rear support member
- 23a: Main body portion
- 23b: Upper horizontal rib (rib)
- 23c: Lower horizontal rib (rib)
- 23d: Vertical rib (rib)
- 23e: Vertical rib (rib)
- 24: Front mounting member
- 24a: Main body portion
- 24b: Upper horizontal rib (rib)
- 24c: Lower horizontal rib (rib)
- 24d: Vertical rib (rib)
- 24e: Vertical rib (rib)
- 24g: Extension portion
- 25: Mounting plate
- 27: Bumper beam main body
- 27a: Bottom wall
- 27b: Upper wall
- 27c: Lower wall
- 28: Impact absorbing member
- 28a: Upper wall
- 28b: Lower wall
- 28c: Bead
- 30: Front bulkhead support member
- 32: Lower member
- 33: Upper member
- 34: Lower member support member
- 34a: Bottom wall
- 34b: Upper wall
- 34c: Lower wall
- 34g: Front wall
- 34f: Outside wall (side wall)
- 35: Lower member
- 36: Linking member
- L: Center line of bumper beam extension

### MODE FOR CARRYING OUT THE INVENTION

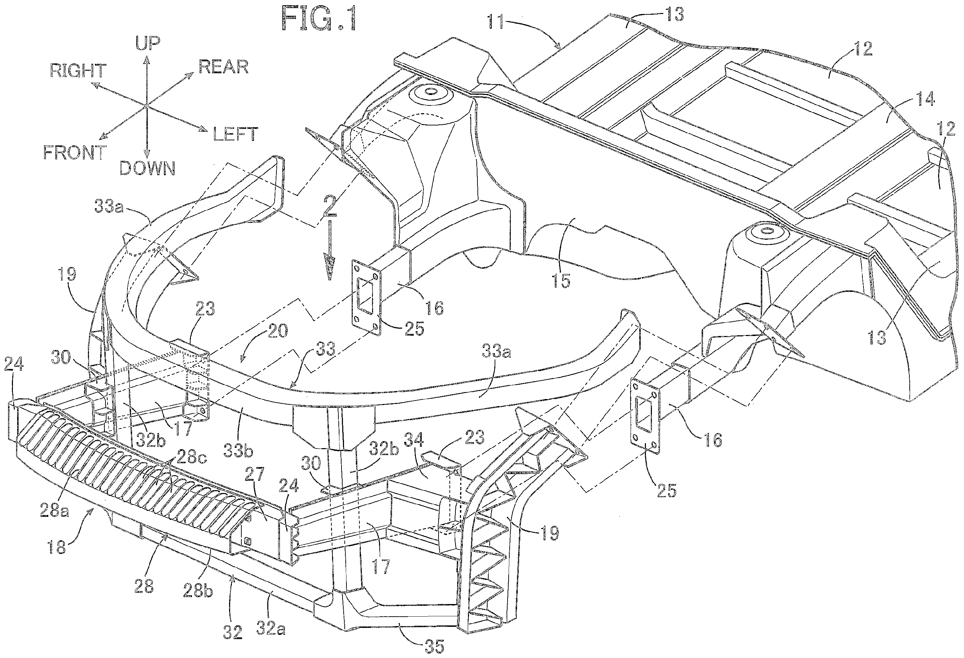

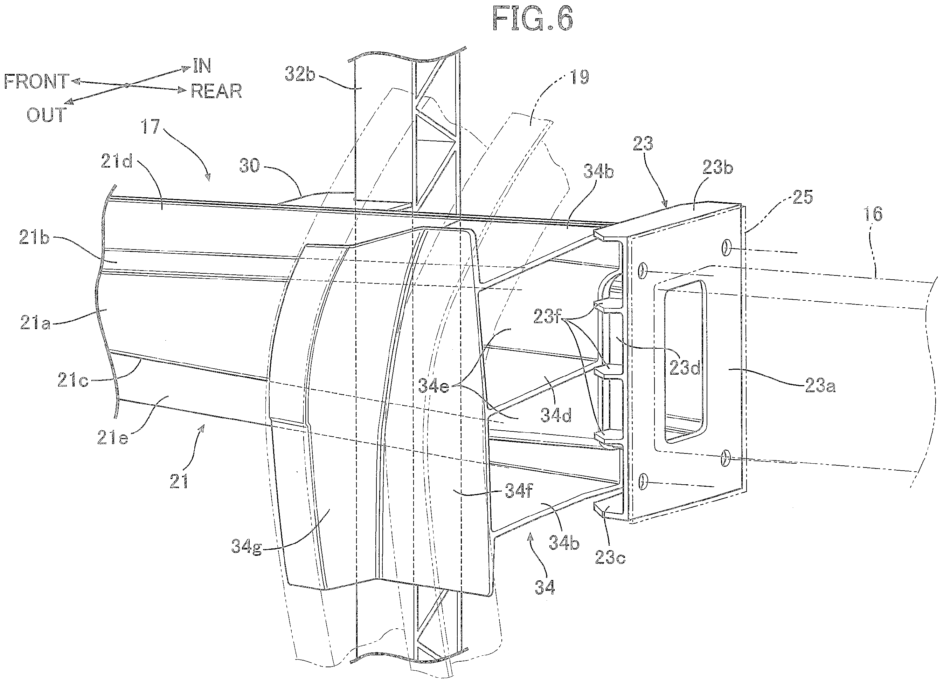

A mode for carrying out the present invention is explained below by reference to FIG. 1 to FIG. 9. In the present specification, the fore-and-aft direction, the left-and-right direction (vehicle width direction), and the up-and-down direction are defined on the basis of an occupant seated on a driver's seat. Furthermore, the direction in which a collision load is inputted is the fore-and-aft direction.

### FIRST EMBODIMENT

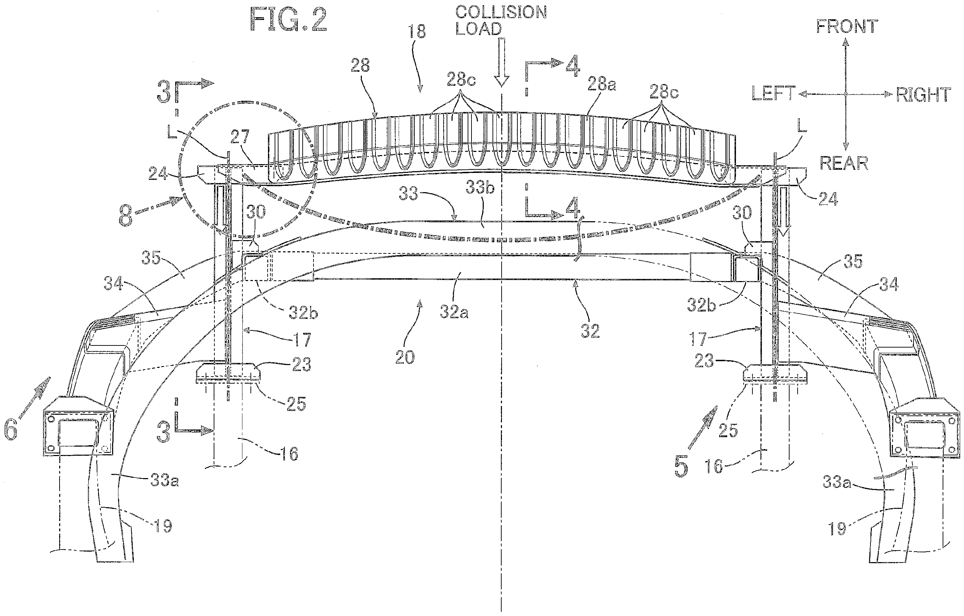

As shown in FIG. 1 and FIG. 2, a cabin 11 made of a fiber-reinforced resin integrally includes a floor panel 12, a pair of left and right side sills 13 and 13, a center tunnel 14, a dash panel 15, etc. A pair of left and right front side frames 16 and 16 made of metal extend forward from the front end of the cabin 11, and a pair of left and right bumper beam extensions 17 and 17 made of a fiber-reinforced resin are connected to the front ends thereof. Opposite end parts in the vehicle width direction of a bumper beam 18 are connected to front end parts of the left and right bumper beam extensions 17 and 17, and intermediate parts in the fore-and-aft direction of a pair of left and right lower members 19 and 19 made of a fiber-reinforced resin are connected to outer faces of rear parts thereof. A rectangular frame-shaped front bulkhead 20 made of a fiber-reinforced resin is provided between the left and right bumper beam extensions 17 and 17.

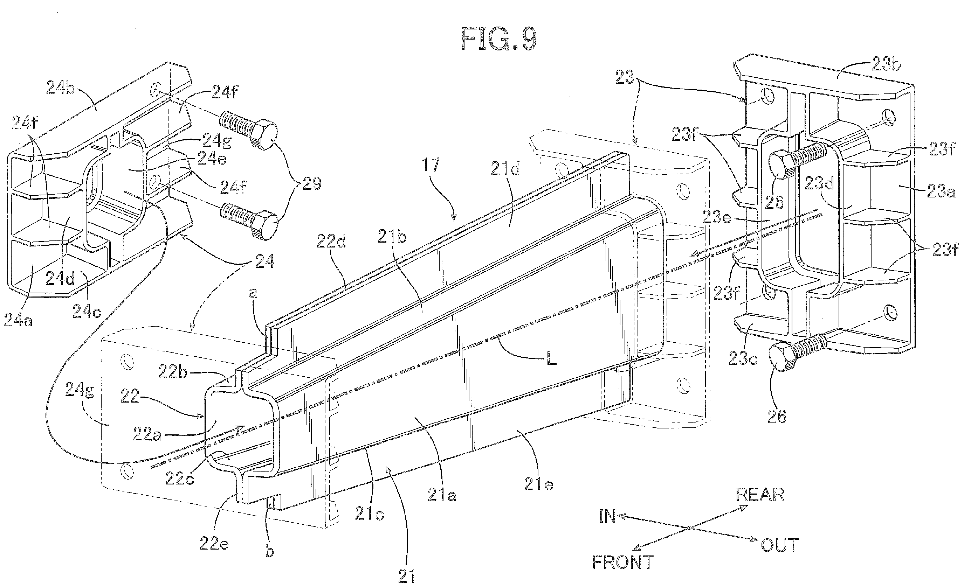

As shown in FIG. 9, the bumper beam extension 17 is formed from an outer half body 21 positioned on the outside in the vehicle width direction and an inner half body 22 positioned on the inside in the vehicle width direction. The outer half body 21 and the inner half body 22, which are members that have a hat-shaped cross section and are plane symmetric to each other, include side walls 21a and 22a, upper walls 21b and 22b, lower walls 21c and 22c, upper joining flanges 21d and 22d, and lower joining flanges 21e and 22e, respectively, the upper joining flanges 21d and 22d and the lower joining flanges 21e and 22e being joined by adhesion. The bumper beam extension 17 is tapered so that the cross-sectional area thereof decreases in going from the rear toward the front, but is formed so that the thickness thereof is uniform throughout.

A rear support member 23 joined to the rear end of the bumper beam extension 17 includes an upper horizontal rib 23b and a lower horizontal rib 23c extending forward from the upper edge and the lower edge of a rectangular plate-shaped main body portion 23a, a pair of left and right vertical ribs 23d and 23e extending in the vertical direction so as to connect the upper horizontal rib 23b and the lower horizontal rib 23c, and six intermediate horizontal ribs 23f extending in the left-and-right direction from the pair of left and right vertical ribs 23d and 23e. The upper horizontal rib 23b, the lower horizontal rib 23c, and the pair of left and right vertical ribs 23d and 23e form a tubular closed cross-section, and an outer peripheral face of the rear end of the bumper beam extension 17 is fitted into an inner peripheral face of the above so as to be in intimate contact therewith and is fixed by adhesion.

A front mounting member 24 is a member having a shape similar to that of the rear support member 23, and includes an upper horizontal rib 24b and a lower horizontal rib 24c extending forward from the upper edge and the lower edge of a rectangular plate-shaped main body portion 24a, a pair of left and right vertical ribs 24d and 24e extending in the vertical direction so as to connect the upper horizontal rib 24b and the lower horizontal rib 24c, and four intermediate horizontal ribs 24f extending in the left-and-right direction from the pair of left and right vertical ribs 24d and 24e. The upper horizontal rib 24b, the lower horizontal rib 24c, and the pair of left and right vertical ribs 24d and 24e form a tubular closed cross-section, and an outer peripheral face of the front end of the bumper beam extension 17 is fitted into an inner peripheral face of the above so as to be in intimate contact therewith and fixed by adhesion.

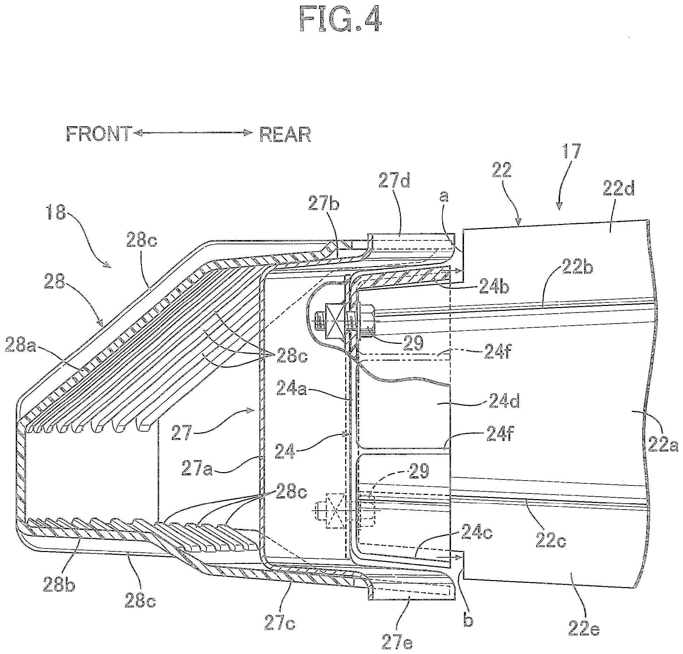

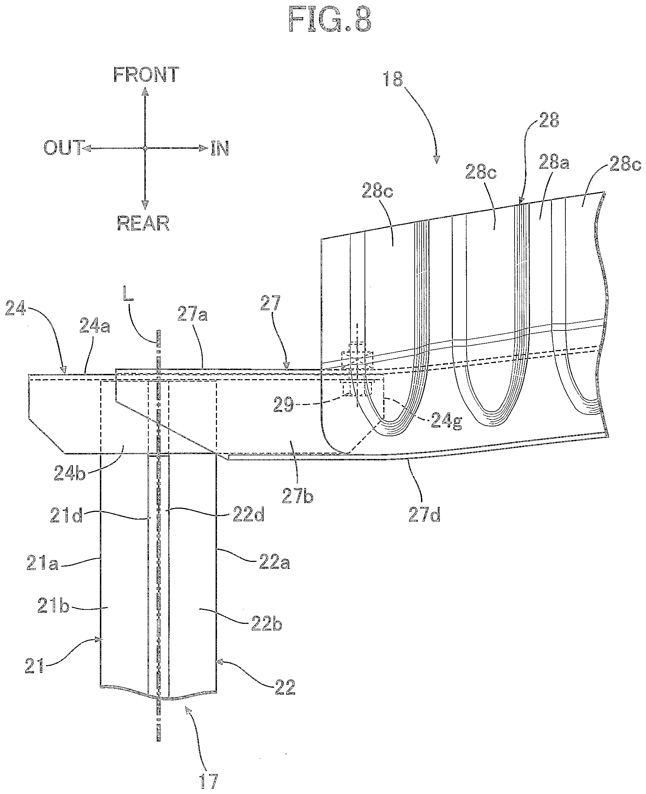

In this arrangement, the upper joining flanges 21d and 22d and the lower joining flanges 21e and 22e of the bumper beam extension 17 have step portions a and b (see FIG. 4 and FIG. 9); since only the area on the side to the front of the step portions a and b is fitted into the tubular closed cross-section, the rear edges of the upper horizontal rib 24b and the lower horizontal rib 24c oppose the front edges of the step portions a and b so as to be capable of abutting thereagainst. Furthermore, the front mounting member 24 has left-right asymmetry with respect to a center line L of the bumper beam 17, the inside portion in the vehicle width direction of the main body portion 24a being longer than the outside portion in the vehicle width direction only by a degree corresponding to an extension portion 24g (see FIG. 8 and FIG. 9).

The bumper beam extension 17, the rear support member 23, and the front mounting member 24 thus integrated are secured by means of four bolts 26 to the front end of a rectangular mounting plate 25 welded to the front end of the front side frame 16.

As shown in FIG. 2, FIG. 4, and FIG. 8, the bumper beam 18 is formed from a bumper beam main body 27 made of a steel sheet and an impact absorbing member 28 made of a fiber-reinforced resin. The bumper beam main body 27 is a member having a hat-shaped cross section opening rearward while having a bottom wall 27a, an upper wall 27b, a lower wall 27c, an upper flange 27d, and a lower flange 27e, and a middle part thereof in the vehicle width direction when viewed from above is curved into an arc so as to project forward. An outer end part in the vehicle width direction of the bumper beam main body 27 is secured by means of two bolts 29 and 29 to the extension portion 24g, which is formed by extending the main body portion 24a of the front mounting member 24 inside in the vehicle width direction. In this state, the outer end in the vehicle width direction of the bumper beam main body 27 projects further outside in the vehicle width direction than the center line L of the bumper beam extension 17 (see FIG. 8).

The impact absorbing member 28 covering a front face of the bumper beam main body 27 is a member having a V-shaped cross section while having an upper wall 28a and a lower wall 28b, the upper wall 28a and the lower wall 28b being fixed to the upper wall 27b and the lower wall 27c respectively of the bumper beam main body 27 by adhesion. A large number of beads 28c extending in the fore-and-aft direction are formed on the upper wall 28a and the lower wall 28b of the impact absorbing member 28. In a state in which the impact absorbing member 28 is joined to the bumper beam main body 27, the two form a hollow closed cross-section, and the outer end in the vehicle width direction of the impact absorbing member 28 is positioned in the vicinity of the two bolts 29 and 29 securing the bumper beam main body 27 to the front mounting member 24 (see FIG. 8).

As shown in FIG. 1, FIG. 2, and FIG. 7(B), supported on inner faces in the vehicle width direction of the side walls 22a and 22a of the inner half bodies 22 and 22 of the left and right bumper beam extensions 17 and 17 via front bulkhead support members 30 and 30 made of a fiber-reinforced resin is the front bulkhead 20 made of a fiber-reinforced resin. The front bulkhead 20 is formed into a rectangular frame shape by joining an upper beam 33b of an upper member 33 to left and right upper end parts of a lower member 32 that is curved into a U-shape when viewed from the front while having a lower beam 32a and a pair of left and right side beams 32b and 32b, the upper beam 33b being formed integrally with a pair of left and right upper members 33a and 33a and curving into a U-shape when viewed from above, and the pair of left and right side beams 32b and 32b of the lower member 32 being joined to the front bulkhead support members 30 and 30.

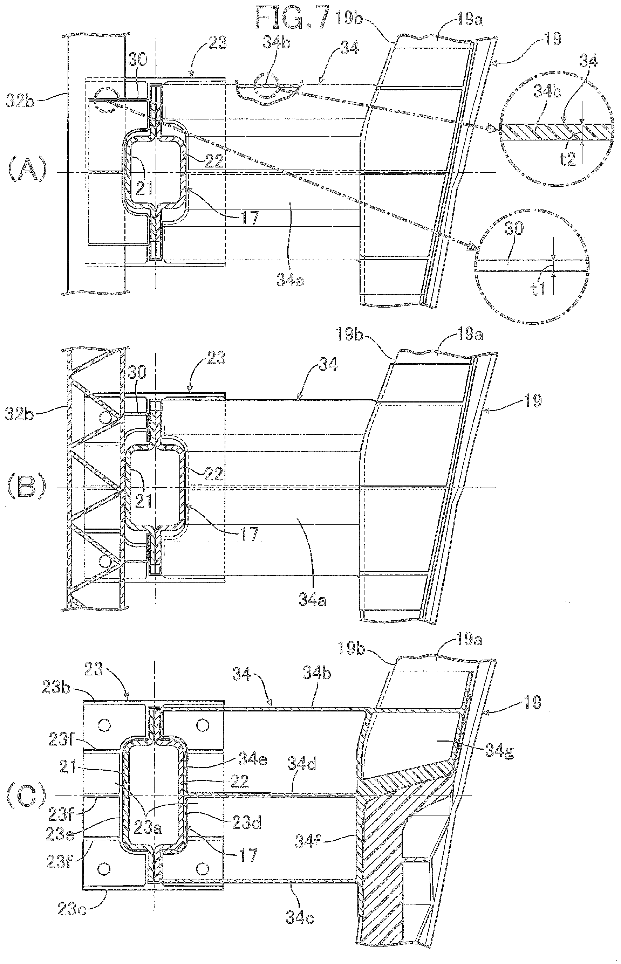

As shown in FIG. 1 to FIG. 3, FIG. 5, FIG. 6, and FIG. 7(C), supported on outer faces in the vehicle width direction of the side walls 21a and 21a of the outer half bodies 21 and 21 of the left and right bumper beam extensions 17 and 17 via lower member support members 34 and 34 made of a fiber-reinforced resin are intermediate parts in the fore-and-aft direction of the lower members 19 and 19, which are made of a fiber-reinforced resin. An inside part of the lower member support member 34 is formed into a squared U-shaped cross section opening rearward while including a bottom wall 34a, an upper wall 34b, and a lower wall 34c, and includes a reinforcing horizontal rib 34d in its interior, and an inside wall 34e covering the inner end in the vehicle width direction thereof is adhered to the side walls 21a and 21a of the outer half bodies 21 and 21. Furthermore, an outside part connected to the outside in the vehicle width direction of the inside part of the lower member support member 34 is formed into an L-shaped cross section while including an outside wall 34f and a front wall 34g, and a front wall 19a and a side wall 19b of the lower member 19 are adhered thereto (see FIG. 7 (C)).

Rear ends of the upper wall 34b and the lower wall 34c, which extend rearward, of the lower member support member 34 oppose front ends of the upper horizontal rib 23b and the lower horizontal rib 23c, which extend forward, of the rear support member 23, and in this arrangement the rearward-extending upper wall 34b of the lower member support member 34 is positioned slightly upward of the upper horizontal rib 23b of the rear support member 23, and the rearward-extending lower wall 34c of the lower member support member 34 is positioned slightly downward of the lower horizontal rib 23 c of the rear support member 23. A thickness t1 of the front bulkhead support members 30 and 30 positioned on the front side is smaller than a thickness t2 of the lower member support members 34 and 34 positioned on the rear side (see FIG. 7 (A)).

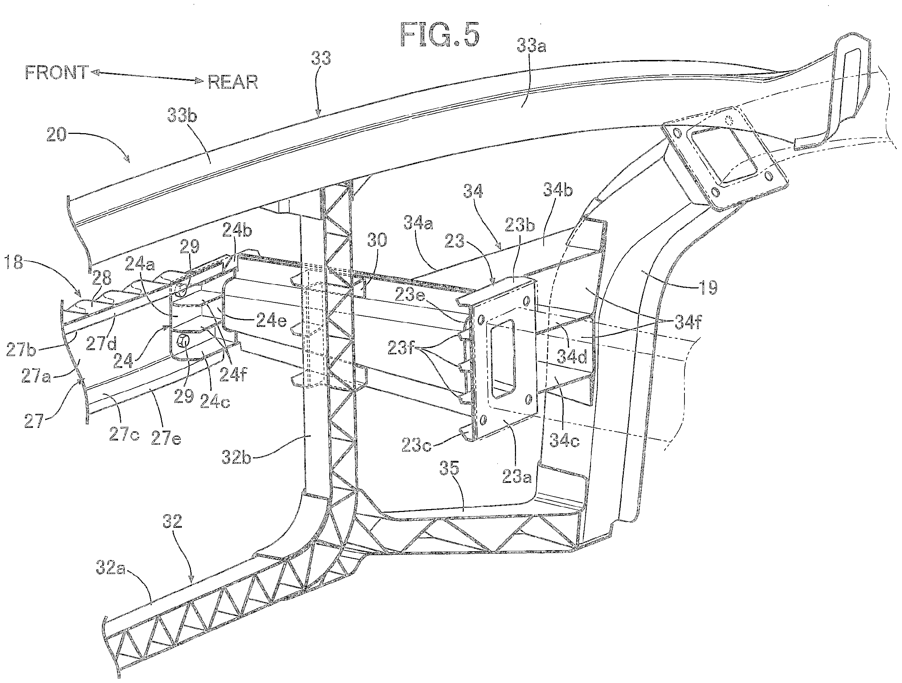

As shown in FIG. 1 and FIG. 5, front ends of the lower members 19 and 19 curving downward to the front and left and right corner parts of the lower member 32 of the front bulkhead 20 are connected by means of linking members 35 and 35 made of a fiber-reinforced resin.

The operation of the embodiment of the present invention having the above arrangement is now explained.

When a vehicle is involved in a frontal collision and the collision load is inputted into the bumper beam 18, first the impact absorbing member 28, which is made of a fiber-reinforced resin, on the front face side of the bumper beam 18 crumples so as to adsorb the collision energy.

Subsequently, the collision load is transmitted to the bumper beam main body 27 on the rear face side of the bumper beam 18. Since the bumper beam main body 27, which is made of a steel sheet and is formed into a squared U-shaped cross section while having the bottom wall 27a, the upper wall 27b, and the lower wall 27c has high malleability, it only flexes rearward into an arc shape but does not bend, the collision load is transmitted effectively from the opposite end parts in the vehicle width direction to the left and right bumper beam extensions 17 and 17, and the bumper beam extensions 17 and 17 can thereby be crumpled in the fore-and-aft direction, thus absorbing energy. In this process, since the thickness of the bumper beam extension 17 is uniform from the front toward the rear, and the cross-sectional area of the closed cross-section of the bumper beam extension 17 increases in going from the front toward the rear (see FIG. 7), it is possible to crumple the bumper beam extension 17 by virtue of the load of the frontal collision sequentially from the front end side, in which the strength is low, to the rear end side, in which the strength is high, thereby enhancing the impact absorption performance.

Moreover, the bumper beam main body 27 is a member having a squared U-shaped cross section opening rearward while having the bottom wall 27a, the upper wall 27b, and the lower wall 27c, the impact absorbing member 28 is a member having a V-shaped cross section opening rearward while having the upper wall 28a and the lower wall 28b, and the upper wall 28a and the lower wall 28b of the impact absorbing member 28 are joined to the upper wall 27b and the lower wall 27c of the bumper beam main body 27 (see FIG. 4), therefore making it possible to enhance the energy-absorbing effect by forming the bumper beam 18 into a hollow closed cross-section and to further enhance the efficiency of transmitting a collision load to the bumper beam extensions 17 and 17 by increasing the bending stiffness of the bumper beam 18.

In this arrangement, since the extending beads 28c are formed in the fore-and-aft direction of the upper wall 28a and the lower wall 28b of the impact absorbing member 28, it is possible to increase the amount of energy absorbed by crumpling of the impact absorbing member 28.

If the bumper beam 18 were formed only from the impact absorbing member 28, which is made of a fiber-reinforced resin, the impact absorbing member 28 would easily be bent by the collision load, the collision load would not be transmitted efficiently to the left and right bumper beam extensions 17 and 17, and there is a possibility that absorption of energy by crumpling of the bumper beam extensions 17 and 17 would not be carried out fully. If the bumper beam 18 were formed only from the bumper beam main body 27, which is made of a steel sheet, it would be possible to transmit the collision load to the bumper beam extensions 17 and 17, but there is a possibility that since the bumper beam 18 itself would not exhibit an effect in absorbing collision energy, the overall performance in absorbing collision energy would be degraded.

On the other hand, in accordance with the present embodiment, due to the bumper beam 18 being formed by joining the bumper beam main body 27 and the impact absorbing member 28, while the bumper beam 18 itself exhibits an effect in absorbing collision energy, the effect in absorbing collision energy can be enhanced by reliably crumpling the bumper beam extensions 17 and 17.

Furthermore, since the front mounting member 24 having the extension portion 24g extending inside in the vehicle width direction is fixed to the front end part of the bumper beam extension 17, and in a state in which the outer end in the vehicle width direction of the bumper beam main body 27 is positioned further outside in the vehicle width direction than the center line L of the bumper beam extension 17 the bumper beam main body 27 is secured to the front face of the extension portion 24g by means of the bolts 29 and 29 (see FIG. 8), it is possible, by strongly reinforcing by means of the front mounting member 24 the parts of the bumper beam 18 and the bumper beam extension 17 where they are joined so that the angle formed thereby does not change, to exert a compressive load in the fore-and-aft direction on the bumper beam extension 17 without exerting a bending moment thereon, thus enabling the bumper beam extension 17 to be reliably crumpled in the fore-and-aft direction.

Moreover, since the outer end in the vehicle width direction of the impact absorbing member 28 is positioned in the vicinity of the parts of the bumper beam main body 27 and the extension portion 24g where they are fastened by means of the bolts 29 and 29 (see FIG. 8), switching from energy absorption by crumpling of the impact absorbing member 28 to energy absorption by crumpling of the bumper beam extensions 17 and 17 is carried out smoothly, thus enhancing the energy-absorbing effect.

Furthermore, since the bumper beam extension 17 is a member having a hollow closed cross-section, and the front end part of the bumper beam extension 17 is fitted into and fixed to the inside of the upper horizontal rib 24b, the lower horizontal rib 24c, and the vertical ribs 24d and 24e provided so as to project rearward from the rear face of the front mounting member 24 (see FIG. 9), not only is it possible to easily carry out positioning when the bumper beam extension 17 and the front mounting member 24 are joined, but it is also possible, by strongly joining the front mounting member 24 to the bumper beam extension 17 so that it is not inclined relative thereto, to more reliably carry out the transmission of a collision load from the bumper beam 18 to the bumper beam extension 17.

Moreover, since the upper horizontal rib 24b and the lower horizontal rib 24c of the front mounting member 24, which are made of a fiber-reinforced resin, oppose the step portions a and b at the front ends of the upper joining flanges 21d and 22d and the lower joining flanges 21e and 22e of the bumper beam extension 17 so as to be capable of abutting thereagainst (see FIG. 4), when the collision load of a frontal collision is inputted from the bumper beam 18 into the front mounting member 24, it is possible for the upper horizontal rib 24b and the lower horizontal rib 24c of the front mounting member 24, which moves rearward, to bite into the step portions a and b at the front ends of the upper joining flanges 21d and 22d and the lower joining flanges 21e and 22e of the bumper beam extension, thus enabling an energy-absorbing effect to be exhibited.

Furthermore, since the bumper beam extension 17 is formed into a hollow closed cross-section by joining together the upper joining flanges 21d and 22d and the lower joining flanges 21e and 22e of the outer half body 21 and the inner half body 22, which are a left and right pair having a hat-shaped cross section, the rear support member 23 secured to the mounting plate 25 includes the upper horizontal rib 23b, the lower horizontal rib 23c, and the vertical ribs 23d and 23e, which project forward, and the rear end part of the bumper beam extension 17 is fitted into and fixed to the inner peripheries of the upper horizontal rib 23b, the lower horizontal rib 23c, and the vertical ribs 23d and 23e of the rear support member 23 (see FIG. 9), it is possible to strongly integrate the rear end part of the bumper beam extension 17 with the rear support member 23 by means of a structure that is lightweight and simple, and when the bumper beam extension 17 is pressed against the mounting plate 25 on the front end part of the front side frame 16 by means of the collision load of a frontal collision, it is possible, by preventing the bumper beam extension 17 from being inclined relative to the fore-and-aft direction, to increase the amount of energy absorbed by reliably crumpling the entire bumper beam extension 17.

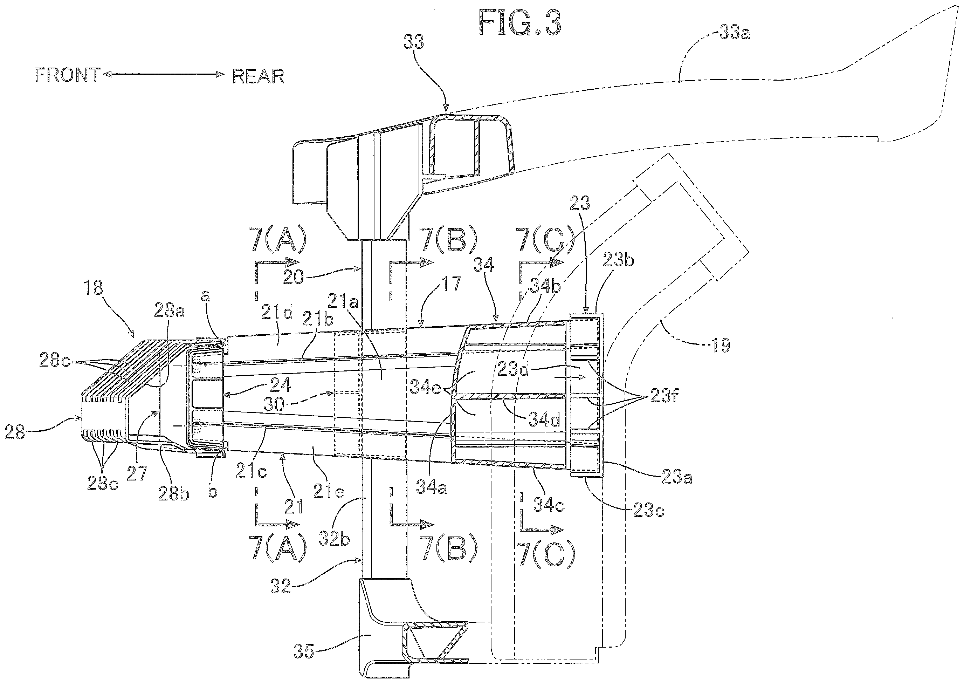

Moreover, since the lower member support member 34, which is made of a fiber-reinforced resin, is fixed to the outer face in the vehicle width direction of the bumper beam extension 17, and the lower member support member 34 includes the inside part having a squared U-shaped cross section opening rearward while having the bottom wall 34a, the upper wall 34b, and the lower wall 34c, and the outside part having an L-shaped cross section and fixed to the lower member 19 while having the front wall 34g and the outside wall 34f (see FIG. 3 and FIG. 5 to FIG. 7), it is possible for an energy-absorbing effect to be exhibited by crumpling the lower member support member 34 and the lower member 19 by means of the collision load of a frontal collision transmitted from the bumper beam extension 17.

Furthermore, since the rear support member 23 of the bumper beam extension 17 is formed into a squared U-shaped cross section opening forward while having the main body portion 23a, the upper horizontal rib 23b, and the lower horizontal rib 23c, and the opening part of the lower member support member 34 opening rearward is fitted into the interior of the opening part of the rear support member 23 (see FIG. 3), when the collision load of a frontal collision is inputted into the lower member support member 34, it is possible for an energy-absorbing effect to be exhibited due to the opening part of the lower member support member 34 being fitted into the interior of the opening part of the rear support member 23.

Moreover, since the bumper beam extension 17 includes the front bulkhead support member 30, which is thin and positioned on the front side, and the lower member support member 34, which is thick and positioned on the rear side, the strength of the bumper beam extension 17 increases gradually in going from the front side toward the rear side, and it is thereby possible to sequentially crumple the bumper beam extension 17 from the front end side by means of the collision load of a frontal collision, thus enhancing the energy-absorbing effect.

Furthermore, since the front bulkhead 20 is formed into a rectangular frame shape when viewed from the front by joining the upper beam 33b, which is in the middle in the vehicle width direction of the substantially U-shaped upper member 33 that opens rearward when viewed from above, to the substantially U-shaped lower member 32 that opens upward when viewed from the front, and the corner parts at the opposite sides in the vehicle width direction of the lower member 32 and the front end parts of the lower members 19 and 19 are linked via the linking members 35 and 35, which are made of a fiber-reinforced resin (see FIG. 1), it is possible to disperse a collision load that has been transmitted from the bumper beam extensions 17 and 17 to the front bulkhead 20, between the lower members 19 and 19 via the linking members 35 and 35 and to absorb it effectively.

An embodiment of the present invention is explained above, but the present invention may be modified in a variety of ways.

For example, in the embodiment the lower member support member 34 opens rearward, but a lower member support member 34 opening forward may be employed.

## Claims

1. A structure for a front part of a body of an automobile, in which a rear end part of a bumper beam extension (17) made of a fiber-reinforced resin is fixed to a mounting plate (25) provided on a front end part of a front side frame (16) made of metal, wherein
the bumper beam extension (17) is formed with a hollow closed cross-section by joining together joining flanges (21d, 21e, 22d, 22e) of a pair of left and right hat-shaped cross section members (21, 22), a rear support member (23) secured to the mounting plate (25) comprises a forward-projecting rib (23b, 23c, 23d, 23e) having a closed cross-section, and the rear end part of the bumper beam extension (17) is fitted into and fixed to an inner periphery of the rib (23b, 23c, 23d, 23e) of the rear support member (23)
**characterized in that** the plate thickness of the bumper beam extension (17) as measured in the direction perpendicular to the front to rear direction of the vehicle is uniform from the front toward the rear, and the cross-sectional area of the closed cross section of the bumper beam extension (17) increases in going from the front toward the rear.

2. The structure for a front part of a body of an automobile according to Claim 1, wherein a front mounting member (24) made of a fiber-reinforced resin and having a bumper beam (18) secured thereto is fixed to a front end part of the bumper beam extension (17), the front mounting member (24) is formed into a substantially squared U-shaped cross section opening rearward while having a main body portion (24a), an upper horizontal rib (24b) and a lower horizontal rib (24c), and the upper horizontal rib (24b) and the lower horizontal rib (24c) oppose a front end part of the joining flange (21d, 21e, 22d, 22e) of the bumper beam extension (17) so as to be capable of abutting thereagainst.

3. The structure for a front part of a body of an automobile according to Claim 1, wherein opposite end parts in the vehicle width direction of a bumper beam (18) are fixed to front end parts of a pair of the left and right bumper beam extensions (17), the bumper beam (18) having an impact absorbing member (28) made of a fiber-reinforced resin joined to a front face of a bumper beam main body (27) made of a steel sheet,
wherein a front mounting member (24) having an extension portion (24g) extending inside in the vehicle width direction is fixed to the front end part of the bumper beam extension (17), and in a state in which an outer end in the vehicle width direction of the bumper beam main body (27) is positioned further outside in the vehicle width direction than a center line (L) of the bumper beam extension (17), the bumper beam main body (27) is secured to a front face of the extension portion (24g).

4. The structure for a front part of a body of an automobile according to Claim 3, wherein the bumper beam main body (27) is a member having a substantially squared U-shaped cross section opening rearward while having a bottom wall (27a), an upper wall (27b) and a lower wall (27c), the impact absorbing member (28) is a member having a substantially V-shaped cross section opening rearward while having an upper wall (28a) and a lower wall (28b), and the upper wall (28a) and the lower wall (28b) of the impact absorbing member (28) are joined to the upper wall (27b) and the lower wall (27c) of the bumper beam main body (27).

5. The structure for a front part of a body of an automobile according to Claim 4, wherein the upper wall (28a) and the lower wall (28b) of the impact absorbing member (28) comprise a plurality of beads (28c) extending in a fore-and-aft direction.

6. The structure for a front part of a body of an automobile according to any one of Claim 3 to Claim 5, wherein an outer end in the vehicle width direction of the impact absorbing member (28) is positioned in the vicinity of parts where the bumper beam main body (27) and the extension portion (24g) are fastened to each other.

7. The structure for a front part of a body of an automobile according to Claim 3, wherein the bumper beam extension (17) is a member having a hollow closed cross-section and is fixed by fitting a front end part of the bumper beam extension (17) to an inside of a rib (24b, 24c, 24d, 24e) that has a closed cross-section and is provided so as to project rearward from a rear face of the front mounting member (24).

## Patentansprüche

1. Struktur für ein Frontteil einer Automobilkarosserie, in der ein hinteres Endteil einer aus faserverstärktem Kunststoff hergestellten Stoßstangenverlängerung (17) an einer Montageplatte (25) befestigt ist, die an einem vorderen Endteil eines aus Metall hergestellten vorderen Seitenrahmens (16) vorgesehen ist, wobei
die Stoßstangenverlängerung (17) mit einem hohlen geschlossenen Querschnitt gebildet ist, indem Verbindungsflansche (21d, 21e, 22d, 22e) eines Paars von linken und rechten Hutförmiger-Querschnitt-Elementen (21, 22) miteinander verbunden sind, ein an der Montageplatte (25) gesichertes hinteres Tragelement (23) eine nach vorne vorstehende Rippe (23b, 23c, 23d, 23e) mit geschlossenem Querschnitt aufweist, und das hintere Endteil der Stoßstangenverlängerung (17) in einen Innenumfang der Rippe (23b, 23c, 23d, 23e) des hinteren Tragelements (23) eingesetzt und dort befestigt ist,
**dadurch gekennzeichnet, dass** die Plattendicke der Stoßstangenverlängerung (17), gemessen in Richtung senkrecht zur Vorne-Hinten-Richtung des Fahrzeugs, von vorne nach hinten hin gleichmäßig ist, und die Querschnittsfläche des geschlossenen Querschnitts der Stoßstangenverlängerung (17) von vorne nach hinten gehend zunimmt.

2. Die Struktur für ein Frontteil einer Automobilkarosserie nach Anspruch 1, wobei ein vorderes Montageelement (24), das auf faserverstärktem Kunststoff hergestellt ist und an dem eine Stoßstange (18) gesichert ist, an einem vorderen Endteil der Stoßstangenverlängerung (17) befestigt ist, wobei das vordere Montageelement (24) zu einem im Wesentlichen Rechteck-U-förmigem Querschnitt geformt ist, der sich nach hinten öffnet, während es einen Hauptkörperabschnitt (24a), eine obere horizontale Rippe (24b) und eine untere horizontale Rippe (24c) aufweist, und die obere horizontale Rippe (24b) und die untere horizontale Rippe (24c) einem vorderen Endteil des Verbindungsflanschs (21d, 21e, 22d, 22e) der Stoßstangenverlängerung (17) gegenüberliegen, so dass sie sich dagegen abstützen können.

3. Die Struktur für ein Frontteil einer Automobilkarosserie nach Anspruch 1, wobei in der Fahrzeugbreitenrichtung entgegengesetzte Endteile einer Stoßstange (18) an vorderen Endteilen eines Paars der linken und rechten Stoßstangenverlängerungen (17) befestigt sind, wobei die Stoßstange (18) ein aus faserverstärktem Kunststoff hergestelltes Aufprallabsorptionselement (28) aufweist, das mit einer Vorderseite eines aus Stahlblech hergestellten Stoßstangenhauptkörpers (27) verbunden ist,
wobei ein vorderes Montageelement (24), das einen sich in der Fahrzeugbreitenrichtung einwärts erstreckenden Verlängerungsabschnitt (24g) aufweist, an dem vorderen Endteil der Stoßstangenverlängerung (17) befestigt ist, und in einem Zustand, in dem ein in der Fahrzeugbreitenrichtung äußeres Ende des Stoßstangenhauptkörpers (27) in der Fahrzeugbreitenrichtung weiter außen angeordnet ist als eine Mittellinie (L) der Stoßstangenverlängerung (17), der Stoßstangenhauptkörper (27) an einer Vorderseite des Verlängerungsabschnitts (24g) gesichert ist.

4. Die Struktur für ein Frontteil einer Automobilkarosserie nach Anspruch 3, wobei der Stoßstangenhauptkörper (27) ein Element mit im Wesentlichen Rechteck-U-förmigem Querschnitt ist, der sich nach hinten öffnet, während er eine Bodenwand (27a), eine obere Wand (27b) und eine untere Wand (27c) aufweist, wobei das Aufprallabsorptionselement (28) ein Element mit im Wesentlichen V-förmigen Querschnitt ist, der sich nach hinten öffnet, während es eine obere Wand (28a) und eine untere Wand (28b) aufweist, und die obere Wand (28a) und die untere Wand (28b) des Aufprallabsorptionselements (28) mit der oberen Wand (27b) und der untern Wand (27c) des Stoßstangenhauptkörpers (27) verbunden sind.

5. Die Struktur für ein Frontteil einer Automobilkarosserie nach Anspruch 4, wobei die obere Wand (28a) und die untere Wand (28b) des Aufprallabsorptionselements (28) eine Mehrzahl von Wülsten (28c) aufweisen, die sich in Vorne-Hinten-Richtung erstrecken.

6. Die Struktur für ein Frontteil einer Automobilkarosserie nach einem von Anspruch 3 bis Anspruch 5, wobei ein in der Fahrzeugbreitenrichtung äußeres Ende des Aufprallabsorptionselements (28) in der Nachbarschaft von Teilen positioniert ist, wo der Stoßstangenhauptkörper (27) und der Verlängerungsabschnitt (24g) aneinander befestigt sind.

7. Die Struktur für ein Frontteil einer Automobilkarosserie nach Anspruch 3, wobei die Stoßstangenverlängerung (17) ein Element mit hohlem geschlossenem Querschnitt ist und durch Ansetzen eines vorderen Endteils der Stoßstangenverlängerung (17) an eine Innenseite einer Rippe (24b, 24c, 24d, 24e) befestigt ist, die einen geschlossenen Querschnitt hat und so vorgesehen ist, dass sie von einer Rückseite des vorderen Montageelements (24) nach hinten vorsteht.

## Revendications

1. Structure pour une partie avant d'une carrosserie d'une automobile, dans laquelle une partie d'extrémité arrière d'une extension de poutre de pare-chocs (17) réalisée à partir d'une résine renforcée en fibres, est fixée sur une plaque de montage (25) prévue sur une partie d'extrémité avant d'un bâti latéral avant (16) réalisé à partir de métal, dans laquelle :
l'extension de poutre de pare-chocs (17) est formée avec une section transversale fermée creuse en assemblant des sangles d'assemblage (21d, 21e, 22d, 22e) d'une paire d'éléments transversaux en forme de chapeau gauche et droit (21, 22), un élément de support arrière (23) fixé à la plaque de montage (25) comprend une nervure en saillie vers l'avant (23b, 23c, 23d, 23e) ayant une section transversale fermée, et la partie d'extrémité arrière de l'extension de poutre de pare-chocs (17) est montée dans et fixée sur une périphérie interne de la nervure (23b, 23c, 23d, 23e) de l'élément de support arrière (23),
**caractérisée en ce que** l'épaisseur de plaque de l'extension de poutre de pare-chocs (17), telle que mesurée dans la direction perpendiculaire à la direction avant - arrière du véhicule est uniforme de l'avant vers l'arrière, et la surface transversale de la section transversale fermée de l'extension de poutre de pare-chocs (17) augmente en allant de l'avant vers l'arrière.

2. Structure pour une partie avant d'une carrosserie d'une automobile selon la revendication 1, dans laquelle l'élément de montage avant (24) réalisé à partir d'une résine renforcée en fibres et ayant une poutre pare-chocs (18) fixée à cette dernière, est fixé sur une partie d'extrémité avant de l'extension de poutre de pare-chocs (17), l'élément de montage avant (24) est formé selon une section transversale en forme de U sensiblement carré s'ouvrant vers l'arrière tout ayant une partie de corps principal (24a), une nervure horizontale supérieure (24b) et une nervure horizontale inférieure (24c), et la nervure horizontale supérieure (24b) et la nervure horizontale inférieure (24c) s'opposent à une partie d'extrémité avant de la bride d'assemblage (21d, 21e, 22d, 22e) de l'extension de poutre de pare-chocs (17) afin de pouvoir venir en butée contre elle.

3. Structure pour une partie avant d'une carrosserie d'une automobile selon la revendication 1, dans laquelle des parties d'extrémité opposées dans le sens de la largeur du véhicule d'une poutre de pare-chocs (18) sont fixées à des parties d'extrémité avant d'une paire d'extensions de poutre de pare-chocs gauche et droite (17), la poutre de pare-chocs (18) ayant un élément d'amortissement de choc (28) réalisé à partir d'une résine renforcée en fibres, assemblé à une face avant d'un corps principal (27) de poutre de pare-chocs réalisé à partir d'une tôle en acier,
dans laquelle l'élément de montage avant (24) ayant un partie d'extension (24g) s'étendant à l'intérieur dans le sens de la largeur du véhicule, est fixé à la partie d'extrémité avant de l'extension de poutre de pare-chocs (17), et dans un état dans lequel une extrémité externe dans le sens de la largeur du véhicule du corps principal de poutre de pare-chocs (27) est positionnée davantage vers l'extérieur dans le sens de la largeur du véhicule qu'une ligne centrale (L) de l'extension de poutre de pare-chocs (17), le corps principal de poutre de pare-chocs (27) est fixé à une face avant de la partie d'extension (24g).

4. Structure pour une partie avant d'une carrosserie d'une automobile selon la revendication 3, dans laquelle le corps principal de poutre de pare-chocs (27) est un élément ayant une section transversale en forme de U sensiblement carré s'ouvrant vers l'arrière tout en ayant une paroi inférieure (27a), une paroi supérieure (27b) et une paroi inférieure (27c), l'élément d'amortissement de choc (28) est un élément ayant une section transversale sensiblement en forme de V s'ouvrant vers l'arrière tout en ayant une paroi supérieure (28a) et une paroi inférieure (28b), et la paroi supérieure (28a) et la paroi inférieure (28b) de l'élément d'amortissement de choc (28) sont assemblées à la paroi supérieure (27b) et la paroi inférieure (27c) du corps principal de poutre de pare-chocs (27).

5. Structure pour une partie avant d'une carrosserie d'une automobile selon la revendication 4, dans laquelle la paroi supérieure (28a) et la paroi inférieure (28b) de l'élément d'amortissement de choc (28) comprennent une pluralité de bourrelets (28c) s'étendant dans une direction vers l'avant et vers l'arrière.

6. Structure pour une partie avant d'une carrosserie d'une automobile selon l'une quelconque des revendications 3 à 5, dans laquelle une extrémité externe dans le sens de la largeur du véhicule de l'élément d'amortissement de choc (28) est positionnée à proximité des parties où le corps principal de poutre de pare-chocs (27) et la partie d'extension (24g) sont fixés entre eux.

7. Structure pour une partie avant d'une carrosserie d'une automobile selon la revendication 3, dans laquelle l'extension de poutre de pare-chocs (17) est un élément ayant une section transversale fermée creuse et est fixée en montant une partie d'extrémité avant de l'extension de poutre de pare-chocs (17) sur un intérieur d'une nervure (24b, 24c, 24d, 24e) qui a une section transversale fermée et est prévue afin de faire saillie vers l'arrière à partir d'une face arrière de l'élément de montage avant (24).
